# EUROPEAN PATENT APPLICATION

(11) **EP 4 464 432 A1**
(43) Date of publication of application: **20.11.2024**
(21) Application number: 23740307.6
(22) Date of filing: 12.01.2023
(51) Int. Cl.: B09B 5/00, B02C 19/18, C09J 9/02, C09J 11/00, C09J 201/00, H01B 1/00, H01B 1/20

(54) **METHOD FOR LOWERING BONDING STRENGTH OF ADHESIVE LAYER**

(30) Priority: 14.01.2022 JP 2022004471
(71) Applicant: WASEDA UNIVERSITY, Shinjuku-ku Tokyo 169-8050 (JP); ADEKA CORPORATION, Arakawa-ku Tokyo 116-8554 (JP)
(72) Inventor: TOKORO, Chiharu, Tokyo 169-8050 (JP); INUTSUKA, Manabu, Tokyo 169-8050 (JP); LIM, Soowon, Tokyo 169-8050 (JP); KOITA, Taketoshi, Tokyo 169-8050 (JP); KONDO, Masataka, Tokyo 169-8050 (JP); OGAWA, Ryo, Tokyo 116-8554 (JP); OTA, Keisuke, Tokyo 116-8554 (JP)
(74) Representative: Müller-Boré & Partner Patentanwälte PartG mbB
(86) International application number: PCT/JP2023/000630
(87) International publication number: WO 2023/136299

(57) **Abstract**

The present invention provides: a method of reducing an adhesive strength of an adhesion layer, the method including applying an electric pulse to an article including a portion in which two or more members are bonded to each other via an adhesion layer containing a conductive filler, to thereby reduce an adhesive strength of the adhesion layer; and a method of reusing a member or a functional part in the member, the method including removing the member from the article by using the above-mentioned method.

## Description

### Technical Field

The present invention relates to a method of reducing an adhesive strength of an adhesion layer in an article including a portion in which two or more members are bonded to each other via the adhesion layer.

### Background Art

It has been required that communication terminal equipment, home appliances, and the like that are not used any longer along with breakdown or a change in product life cycle be collected by vendors, and then disassembled and dismantled to be recycled or reused. Hitherto, the operation has been performed by subjecting a product to manual disassembling and then to physical dismantling with a crusher or the like in many cases. However, such operation has been labor-intensive, and hence has been poor in operation efficiency, and there has also been a problem in the case of reusing a member in that the member after dismantling and a functional part in the member are damaged because the dismantling is performed with the crusher or the like.

Under such circumstances, in recent years, there have been proposed various methods of disassembling an object by causing pulsed power discharge in a liquid.

For example, Patent Document 1 describes a method for reusing materials and/or products by pulsed power according to which a series of electrical discharges is generated between at least two electrodes in a reactor containing an ambient liquid as well as the materials and/or products to be reused, in which the materials and/or products are subjected to a series of electrical discharges of which the energy, the voltage between the electrodes, the switching time, and the discharge frequency are chosen such that the generated electrical discharges generate electric arcs that pass through the materials and/or products to be reused, and mechanical shock waves that propagate across the materials and/or products to be treated in the reactor.

In addition, Patent Document 2 describes a method for comminuting and crushing solid bodies conglomerated from non-metallic or partially metallic constituents and for comminuting homogeneous non-metallic solid bodies by rapid discharge of an electrical energy store, the method comprising comminuting and crushing the solid bodies with a shock wave generated in the solid bodies and in the fluid by applying a high-voltage pulse between ends of high-voltage electrodes and grounded electrodes, wherein the solid bodies are immersed in an electrically non-conductive or only weakly conductive process fluid, wherein the process fluid is stored in a vessel, and wherein, in the process fluid, a system of the high-voltage electrodes and the grounded electrodes protrudes a predetermined distance from their ends to one another into the mixture of the process fluid and the solid bodies.

Further, Patent Document 3 describes a method for fragmenting and/or weakening of a pourable material by means of high-voltage discharges, including the steps of: (a) providing an electrode assembly which is assigned to one or more high-voltage generators, by means of which the electrode assembly is chargeable with high-voltage pulses; (b) guiding a material flow of the pourable material past the electrode assembly by means of a conveying device carrying the material flow, wherein the material flow is immersed in a process liquid; and (c) producing high-voltage punctures through the material flow during the guiding thereof past the electrode assembly by charging of the electrode assembly with high-voltage pulses, wherein electrodes of the electrode assembly are submerged from above in the process liquid, and those electrodes between which the high-voltage punctures are produced face each other with an electrode spacing transversely to the material guiding past direction.

In addition, Patent Document 4 describes an object disassembly method of disassembling a substrate or an object including the substrate by performing discharging in liquid a plurality of times, the method including: when a positive electrode and a ground electrode are provided in liquid held in a container, and the substrate or the object including the substrate is placed on a discharge path between the positive electrode and the ground electrode in the liquid or in a region to which a shock wave generated by discharging travels in the liquid, measuring a peak value of discharge current flowing through the discharge path during discharging; and controlling a discharge condition so that the measured peak value of the discharge current is maintained constant.

However, each of the inventions described in Patent Documents 1 to 4 has high randomness with regard to the discharge path, and is hence not directed to a method of selectively and locally dismantling an object. Accordingly, there has been a problem in that it is difficult to selectively and locally dismantle a specific site of an object having a certain size. Further, there has been a problem in reusing a part because a failure may occur in a function of a dismantled part by receiving a large shock wave in the liquid.

### Citation List

### Patent Document

[Patent Document 1] JP 2012-517892 A
[Patent Document 2] JP 09-75769 A
[Patent Document 3] JP 2018-506429 A
[Patent Document 4] JP 2017-104796 A

### Summary of Invention

### Technical Problem

Accordingly, an object to be solved by the present invention is to provide a method that can efficiently remove a member from an article and that can prevent damage to the member or a functional part built in the member by applying an electric pulse to reduce an adhesive strength of an adhesion layer for bonding the member in the article.

### Solution to Problem

In view of the foregoing, the inventors of the present invention have made extensive investigations, and as a result, have found that when an electric pulse is applied to an article including a portion in which two or more members are bonded to each other via an adhesion layer containing a conductive filler, the adhesive strength of the adhesion layer can be reduced, and thus the members can be efficiently removed from the article, and the members or functional parts built in the members are prevented from being damaged. Thus, the inventors have arrived at the present invention.

That is, the present invention is directed to a method of reducing an adhesive strength of an adhesion layer, the method including applying an electric pulse to an article including a portion in which two or more members are bonded to each other via an adhesion layer containing a conductive filler, to thereby an adhesive strength of the adhesion layer.

### Advantageous Effects of Invention

According to the present invention, a specific portion including members bonded to each other with an adhesion layer containing a conductive filler can be selectively and locally dismantled in an object having a certain size. In addition, by containing the conductive filler in the adhesion layer, the number of times of the application of the pulse required for the dismantling and the amount of energy to be consumed can be reduced, and a dismantling operation can be performed in a short time period. Further, the functions of dismantled parts are less impaired, and hence increases in reuse ratios of dismantled members and functional parts in the members can be achieved. In addition, when the electric pulse is applied in the atmosphere, a vessel for liquid injection is not required.

### Brief Description of Drawings

FIG. 1 is an illustration of a high-voltage pulse generator to be used in a method of reducing an adhesive strength of an adhesion layer of the present invention.
FIG. 2 is a circuit diagram of the high-voltage pulse generator to be used in the method of reducing an adhesive strength of an adhesion layer of the present invention.
FIG. 3 is an enlarged photograph of adhesion layers on steel plates after a test piece formed by using an adhesive composition of Example 1 is dismantled.
FIG. 4 is an enlarged photograph of adhesion layers on steel plates after a test piece formed by using an adhesive composition of Example 2 is dismantled.
FIG. 5 is an enlarged photograph of adhesion layers on steel plates after a test piece formed by using an adhesive composition of Example 3 is dismantled.
FIG. 6 is an enlarged photograph of adhesion layers on a steel plates after a test piece formed by using an adhesive composition of Example 4 is dismantled.
FIG. 7 is an enlarged photograph of adhesion layers on steel plates after a test piece formed by using an adhesive composition of Comparative Example 1 is dismantled.

### Description of Embodiments

A method of reducing an adhesive strength of an adhesion layer of the present invention is described in detail below.

In the present invention, the phrase "reduce an adhesive strength of an adhesion layer" means that when the method of the present invention is performed on an article including a portion in which two or more members are bonded to each other via the adhesion layer, for example, the tensile shear strength (adhesive strength) of the adhesion layer is reduced by 10% or more when the tensile shear strength of the adhesion layer when the method is not performed is defined as 100%.

First, an article to be used in the method of the present invention is described. The article to be used in the method of the present invention includes a portion in which two or more members are bonded to each other via an adhesion layer containing a conductive filler, and the adhesion layer containing the conductive filler is formed of a cured product of an adhesive composition containing the conductive filler.

Examples of the conductive filler include: carbon black; graphene; a carbon nanotube (CNT); metal particles selected from copper, silver, nickel, silver-coated copper, gold-coated copper, silver-coated nickel, and gold-coated nickel; and metal-coated resin particles selected from acrylic resin particles and urethane-based resin particles each coated with copper, silver, nickel, gold, or a mixture thereof.

Of the conductive fillers described above, carbon black or copper is preferred, and carbon black is most preferred from the viewpoint of the ease of breakage of the adhesion layer after an electric pulse is applied to the members bonded to each other via the adhesion layer containing the conductive filler.

The particle diameter (in the case of a carbon nanotube, the length) of the conductive filler is not particularly limited, and is appropriately selected in accordance with, for example, a desired thickness of the adhesion layer and a desired adhesive strength thereof. The conductive filler is used within the range of, for example, from 0.01 um to 1,000 um.

Within the above-mentioned range, the particle diameter (volume basis, D50) of the conductive filler is preferably from 0.015 um to 500 µm, more preferably from 0.02 um to 250 µm, even more preferably from 0.02 um to 50 µm, most preferably from 0.02 um to 1 um from the viewpoint of the adhesive strength of the adhesion layer before the electric pulse is applied.

Herein, the particle diameter may be measured with a particle diameter distribution measurement apparatus by laser diffraction.

In addition, the content of the conductive filler is 0.1 vol% or more of the adhesive composition containing the conductive filler from the viewpoint of the ease of breakage of the adhesion layer after the electric pulse is applied to the members bonded to each other via the adhesion layer containing the conductive filler, and the content is preferably 40 vol% or less of the adhesive composition containing the conductive filler from the viewpoint of the adhesive strength of the adhesion layer before the electric pulse is applied. Furthermore, the content of the conductive filler is more preferably from 0.5 vol% to 25 vol%, even more preferably from 1 vol% to 10 vol% of the adhesive composition containing the conductive filler.

The adhesive composition is not particularly limited, and an adhesive composition that may be cured by heat, light, or the like may be used. A resin to be generally blended in an adhesive composition may be used as a resin to be used for the adhesive composition. Examples of such resin include an epoxy-based resin, an acrylic resin, and a urethane-based resin.

Herein, the term "resin" means a resin before being further increased in molecular weight with a curing agent or a polymerization initiator.

The molecular weight of the resin is preferably from 50 to 10,000, more preferably from 150 to 5,000 from the viewpoint of the adhesive strength of the adhesion layer before the electric pulse is applied.

Herein, the molecular weight may be measured by SEC measurement.

Examples of the epoxy-based resin include: polyglycidyl ether compounds of mononuclear polyhydric phenol compounds, such as hydroquinone, resorcin, pyrocatechol, and phloroglucinol; polyglycidyl ether compounds of polynuclear polyhydric phenol compounds, such as dihydroxynaphthalene, biphenol, methylenebisphenol (bisphenol F), methylenebis(ortho-cresol), ethylidenebisphenol, isopropylidenebisphenol (bisphenol A), isopropylidenebis(ortho-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, and terpene phenol; polyglycidyl ethers of polyhydric alcohols, such as ethylene glycol, propylene glycol, butylene glycol, hexanediol, polyglycol, thiodiglycol, glycerin, trimethylolpropane, pentaerythritol, sorbitol, and a bisphenol A-alkylene oxide adduct; homopolymers and copolymers of glycidyl esters of aliphatic, aromatic, or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylene tetrahydrophthalic acid, and glycidyl methacrylate; epoxy compounds each having a glycidylamino group, such as N,N-diglycidylaniline, bis(4-(N-methyl-N-glycidylamino)phenyl)methane, and diglycidyl ortho-toluidine; epoxidized products of cyclic olefin compounds, such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, and bis(3,4-epoxy-6-methylcyclohexylmethyl) adipate; and epoxidized conjugated diene polymers, such as an epoxidized polybutadiene and an epoxidized styrene-butadiene copolymer, heterocyclic compounds such as triglycidyl isocyanurate, urethane-modified epoxy resins, chelate-modified epoxy resins, and rubber-modified epoxy resins. In addition, those polyepoxy compounds may each be internally cross-linked with an isocyanate-terminated prepolymer or may each be increased in molecular weight with a polyvalent active hydrogen compound (e.g., a polyhydric phenol, a polyamine, or a polyphosphoric acid ester).

The urethane-modified epoxy resin is obtained by causing an epoxy resin having at least one hydroxy group in a molecule thereof and a polyurethane in which an isocyanate group remains to react with each other, and the polyurethane is obtained by causing a polyhydroxy compound and a polyisocyanate compound to react with each other. At the time of the reaction, an excessive amount of the polyisocyanate compound is used with respect to the polyhydroxy compound.

A method of producing the epoxy resin having at least one hydroxy group is not particularly limited, but an example thereof is a method involving a reaction using 1 equivalent to 10 equivalents of epichlorohydrin with respect to 1 equivalent of a hydroxy group of a low-molecular-weight (molecular weight: 50 or more and less than 500) polyol having at least two hydroxy groups, and an alkali metal hydroxide such as sodium hydroxide in combination, at from 40°C to 150°C for from 1 hour to 20 hours.

Examples of the low-molecular-weight polyol having at least two hydroxy groups include, but not particularly limited to, polyphenols, aliphatic polyols, and alicyclic polyols.

Examples of the polyphenols include bisphenol A, bisphenol F, tetrabromobisphenol A, phenol novolac, brominated phenol novolac, cresol novolac, brominated cresol novolac, 4,4'-dihydroxybiphenyl, and 1,1,2,2-tetrakis(hydroxyphenyl)ethane.

Examples of the aliphatic polyols include: polyhydric alcohols, such as ethylene glycol and propylene glycol; linear or branched low-molecular polyols, such as butanediol, pentanediol, hexanediol, octanediol, decanediol, glycerin, trimethylolpropane, trimethylolethane, pentaerythritol, dipentaerythritol, and neopentyl glycol; and ethylene oxide adducts and propylene oxide adducts thereof.

Examples of the alicyclic polyols include cyclohexanediol, cyclohexanetriol, cyclohexanedimethanol, isopropylidenedicyclohexanol, decalindiol, and tricyclodecane dimethanol.

Of the polyols each having at least two hydroxy groups described above, a polyphenol having high reactivity and being easy to produce is preferably used, and bisphenol A and/or bisphenol F available at low cost is more preferably used.

Examples of the polyhydroxy compound to be used for producing the polyurethane include a polyether polyol, a polyester polyol, a polycarbonate polyol, a polyesteramide polyol, an acrylic polyol, and a polyurethane polyol.

An alkylene oxide adduct of a polyol is preferably used as the polyether polyol from the viewpoint of the adhesive strength of the adhesion layer before the electric pulse is applied, and the alkylene oxide preferably has 2 to 4 carbon atoms.

Examples of the polyol to be used for producing the polyether polyol include: aliphatic dihydric alcohols, such as ethylene glycol, propylene glycol, 1,4-butylene glycol (tetramethylene glycol), and neopentane glycol; trihydric alcohols, such as glycerin, trioxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerin, pentaglycerin, 1,2,4-butanetriol, 1,2,4-pentanetriol, and trimethylolpropane; tetrahydric alcohols, such as erythritol, pentaerythritol, 1,2,3,4-pentanetetrol, 2,3,4,5-hexanetetrol, 1,2,3,5-pentanetetrol, and 1,3,4,5-hexanetetrol; pentahydric alcohols, such as adonitol, arabitol, and xylitol; and hexahydric alcohols, such as sorbitol, mannitol, and iditol.

Of those, dihydric alcohols to tetrahydric alcohols are preferred polyhydric alcohols from the viewpoint of the adhesive strength of the adhesion layer before the electric pulse is applied, and propylene glycol, 1,4-butylene glycol, and glycerin are particularly preferred.

Examples of the alkylene oxide for forming the polyether polyol include ethylene oxide, propylene oxide, and butylene oxide (tetramethylene oxide). Of those, propylene oxide and butylene oxide are particularly preferred from the viewpoint of the adhesive strength of the adhesion layer before the electric pulse is applied.

Examples of the polyester polyol include a hitherto known polyester to be produced from a polycarboxylic acid and a polyhydric alcohol, and a polyester obtained from a lactone.

Examples of the polycarboxylic acid to be used for producing the polyester polyol include benzenetricarboxylic acid, adipic acid, succinic acid, suberic acid, sebacic acid, oxalic acid, methyladipic acid, glutaric acid, pimelic acid, azelaic acid, phthalic acid, terephthalic acid, isophthalic acid, thiodipropionic acid, maleic acid, fumaric acid, citraconic acid, and itaconic acid.

Examples of the polyol to be used for producing the polyester polyol include ethylene glycol, propylene glycol, 1,4-butanediol, 1,3-butanediol, 1,5-pentanediol, 1,6-hexanediol, bis(hydroxymethylchlorohexane), diethylene glycol, 2,2-dimethyl propylene glycol, 1,3,6-hexanetriol, trimethylolpropane, pentaerythritol, sorbitol, and glycerin. Polyhydroxy compounds, such as polytetramethylene glycol and polycaprolactone glycol, may each be used as the polyol through partial replacement, in addition to the above-mentioned polyols.

Examples of the polycarbonate polyol include: a product obtained through a dephenolization reaction between a diol and a diphenyl carbonate; a product obtained through a dealcoholization reaction between a diol and a dialkyl carbonate; and a product obtained through a deglycolation reaction between a diol and an alkylene carbonate. Examples of the diol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol, and 3,3-dimethylolheptane.

Examples of the polyisocyanate compound to be used for producing the polyurethane include propane-1,2-diisocyanate, 2,3-dimethylbutane-2,3-diisocyanate, 2-methylpentane-2,4-diisocyanate, octane-3,6-diisocyanate, 3,3-dinitropentane-1,5-diisocyanate, octane-1,6-diisocyanate, 1,6-hexamethylene diisocyanate (HDI), trimethylhexamethylene diisocyanate, lysine diisocyanate, tolylene diisocyanate (TDI), xylylene diisocyanate, metatetramethylxylylene diisocyanate, isophorone diisocyanate (3-isocyanatomethyl-3,5,5-trimethylcyclohexyl isocyanate), 1,3- or 1,4-bis(isocyanatomethyl)cyclohexane, diphenylmethane-4,4'-diisocyanate (MDI), dicyclohexylmethane-4,4'-diisocyanate (hydrogenated MDI), hydrogenated tolylene diisocyanate, and mixtures thereof. Those polyisocyanate compounds may each be an isocyanurate form obtained through trimerization.

The chelate-modified epoxy resin is obtained by causing an epoxy resin and phosphoric acid to react with each other. Further, a chelate urethane-modified epoxy resin obtained by causing an epoxy resin, phosphoric acid, and a polyurethane having an isocyanate group to react with each other may also be used.

As the rubber-modified epoxy resin, there may be used an epoxy resin containing a rubber component obtained by homopolymerizing each of components, such as an isoprene rubber, butadiene, styrene, acrylonitrile, or chloroprene, or copolymerizing two or more kinds of the components, and having an epoxy group at a terminal thereof.

For example, in addition to a homopolymer or a copolymer of a (meth)acrylic monomer (e.g., (meth)acrylic acid or an ester thereof), an acrylic resin obtained by polymerizing the monomer with any other monomer may be used as the acrylic resin.

Examples of the other monomer include: hydroxyalkyl acrylic acid esters, such as methyl 2-(hydroxymethyl)acrylate, methyl 2-(1-hydroxyethyl)acrylate, ethyl 2-(hydroxymethyl)acrylate, and butyl 2-(hydroxymethyl)acrylate; styrene; halogenated styrenes, such as chlorostyrene and bromostyrene; substituted styrenes, such as vinyltoluene and α-methylstyrene; unsaturated nitriles, such as acrylonitrile and methacrylonitrile; unsaturated acid anhydrides, such as maleic anhydride and citraconic anhydride; and unsaturated imides, such as phenylmaleimide and cyclohexylmaleimide.

The acrylic resin may be further modified by a reaction between functional groups of the copolymer.

The acrylic resin may be obtained by polymerizing a monomer mixture containing, for example, methyl methacrylate and/or methyl acrylate in coexistence with a radical polymerization initiator and a chain transfer agent.

Examples of the urethane-based resin include polyurethane and a blocked urethane resin.

The polyurethane is obtained by causing the polyhydroxy compound and the polyisocyanate compound to react with each other as described above. The same compounds as those described for the urethane-modified epoxy resin may be used as the polyhydroxy compound and the polyisocyanate compound to be used in the production of the polyurethane.

In addition, the production of the polyurethane involving causing the polyhydroxy compound and the polyisocyanate compound to react with each other may be performed by an ordinary method.

A blocked urethane resin obtained by blocking a polyurethane, which is obtained by causing the polyhydroxy compound and an excessive amount of the polyisocyanate compound to react with each other, and has an isocyanate (NCO) content of from 0.1 mass% to 10 mass%, with a blocking agent is preferably used as the blocked urethane resin.

Examples of the blocking agent include: active methylene compounds, such as a malonic acid diester (e.g., diethyl malonate), acetylacetone, and an acetoacetic acid ester (e.g., ethyl acetoacetate); oxime compounds, such as acetoxime, methyl ethyl ketoxime (MEK oxime), and methyl isobutyl ketoxime (MIBK oxime); monohydric alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, and stearyl alcohol, and isomers thereof; glycol derivatives, such as ethylene glycol monomethyl ether, ethylene glycol monoethyl ether, ethyldiglycol, ethyltriglycol, ethylene glycol monobutyl ether, and butyldiglycol; amine compounds such as dicyclohexylamine; phenols, such as phenol, cresol, ethylphenol, n-propylphenol, isopropylphenol, butylphenol, tertiary butylphenol, octylphenol, nonylphenol, dodecylphenol, cyclohexylphenol, chlorophenol, bromophenol, resorcin, catechol, hydroquinone, bisphenol A, bisphenol S, bisphenol F, and naphthol; and ε-caprolactone and ε-caprolactam.

A blocking reaction for obtaining a blocked polyurethane from the polyurethane and the blocking agent may be performed by a known reaction method.

A blocked isocyanate resin obtained by modifying the polyisocyanate compound (particularly, an isocyanurate form) with the blocking agent may be used as the blocked urethane resin in addition to the blocked urethane resin obtained by causing the polyurethane and the blocking agent to react with each other.

The blending amount of the resin in the adhesive composition is preferably from 5 mass% to 95 mass%, more preferably from 10 mass% to 90 mass% with respect to the adhesive composition from the viewpoint of the adhesive strength of the adhesion layer before the electric pulse is applied.

For example, a latent curing agent or any other curing agent, a curing catalyst, or a polymerization initiator may be blended in the adhesive composition to be used in the present invention.

At least one kind of compound selected from the group consisting of: dicyandiamide; modified polyamine; hydrazides; 4,4'-diaminodiphenylsulfone; boron trifluoride amine complex salts; ureas; and melamine may be used as the latent curing agent. Examples of the modified polyamine include epoxy addition modified products of amines, amidation modified products of amines, acrylic acid ester-modified products of amines, isocyanate-modified products of amines, and Mannich-modified products of amines.

Examples of the amines for providing the modified polyamine include: aliphatic polyamines, such as ethylenediamine, diethylenetriamine, triethylenetetramine, tetraethylenepentamine, polyoxypropylenediamine, and polyoxypropylenetriamine; alicyclic polyamines, such as isophoronediamine, menthane diamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-2,4,8,10-tetraoxaspiro(5.5)undecane; mononuclear polyamines, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, and 3,5-diethyltolylene-2,6-diamine; aromatic polyamines, such as biphenylenediamine, 4,4-diaminodiphenylmethane, 2,5-naphthylenediamine, and 2,6-naphthylenediamine; and imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole.

Any known curing agent may be used as the other curing agent without particular limitations, and examples thereof include phenol resins, aliphatic amines, aromatic amines, acid anhydrides, and polythiol compounds.

The blending amount of the latent curing agent or the other curing agent is preferably from 1 part by mass to 100 parts by mass, more preferably from 2 parts by mass to 50 parts by mass with respect to 100 parts by mass of the resin from the viewpoint of the adhesive strength of the adhesion layer before the electric pulse is applied.

Examples of the curing catalyst include: phosphines such as triphenylphosphine; phosphonium salts such as tetraphenylphosphonium bromide; imidazoles, such as 2-methylimidazole, 2-phenylimidazole, 2-ethyl-4-methylimidazole, 2-undecylimidazole, 1-cyanoethyl-2-methylimidazole, and imidazole silane (e.g., 2MUSIZ manufactured by Shikoku Chemicals Corporation); imidazole salts that are salts of the imidazoles, and trimellitic acid, isocyanuric acid, and boron; amines, such as benzyldimethylamine and 2,4,6-tris(dimethylaminomethyl)phenol; quaternary ammonium salts such as trimethylammonium chloride; ureas, such as 3-(p-chlorophenyl)-1,1-dimethylurea, 3-(3,4-dichlorophenyl)-1,1-dimethylurea, 3-phenyl-1,1-dimethylurea (1,1-dimethyl-3-phenylurea), isophorone diisocyanate-dimethylurea, and tolylene diisocyanate-dimethylurea; and complex compounds between boron trifluoride, and amines and ether compounds. Those curing catalysts may be used alone or in combination thereof.

The blending amount of the curing catalyst is preferably from 0.1 part by mass to 20 parts by mass, more preferably from 0.5 part by mass to 10 parts by mass with respect to 100 parts by mass of the resin from the viewpoint of the adhesive strength of the adhesion layer before the electric pulse is applied.

Examples of the polymerization initiator include a thermal radical polymerization initiator, a photoradical polymerization initiator, and a cationic polymerization initiator.

Any hitherto known compound may be used as the thermal radical polymerization initiator without particular limitations as long as the compound generates a radical through heating, and examples thereof include: azo compounds, such as 2,2'-azobisisobutyronitrile, 2,2'-azobis(methyl isobutyrate), 2,2'-azobis-2,4-dimethylvaleronitrile, and 1,1'-azobis(1-acetoxy-1-phenylethane); peroxides, such as benzoyl peroxide, di-t-butylbenzoyl peroxide, t-butyl peroxypivalate, and di(4-t-butylcyclohexyl) peroxydicarbonate; and persulfuric acid salts, such as ammonium persulfate, sodium persulfate, and potassium persulfate.

Any hitherto known compound may be used as the photoradical polymerization initiator without particular limitations as long as the compound generates a radical through irradiation with light, and examples thereof include: acetophenone compounds, such as diethoxyacetophenone, 2-hydroxy-2-methyl-1-phenylpropan-1-one, 4'-isopropyl-2-hydroxy-2-methylpropiophenone, 2-hydroxymethyl-2-methylpropiophenone, 2,2-dimethoxy-1,2-diphenylethan-1-one, p-dimethylaminoacetophenone, p-tert-butyldichloroacetophenone, p-tert-butyltrichloroacetophenone, p-azidobenzalacetophenone, 1-hydroxycyclohexyl phenyl ketone, 2-methyl-1-[4-(methylthio)phenyl]-2-morpholinopropanone-1, 2-benzyl-2-dimethylamino-1-(4-morpholinophenyl)-butanone-1, benzoin, benzoin methyl ether, benzoin ethyl ether, benzoin isopropyl ether, benzoin-n-butyl ether, benzoin isobutyl ether, and 1-[4-(2-hydroxyethoxy)-phenyl]-2-hydroxy-2-methyl-1-propane-1-one; benzil-based compounds such as benzil; benzophenone-based compounds, such as benzophenone, methyl o-benzoylbenzoate, Michler's ketone, 4,4'-bisdiethylaminobenzophenone, 4,4'-dichlorobenzophenone, and 4-benzoyl-4'-methyldiphenyl sulfide; thioxanthone-based compounds, such as thioxanthone, 2-methylthioxanthone, 2-ethylthioxanthone, 2-chlorothioxanthone, 2-isopropylthioxanthone, and 2,4-diethylthioxanthone; and oxime ester compounds, such as an oxime ester compound having a carbazole skeleton, an oxime ester compound having a diphenyl sulfide skeleton, and an oxime ester compound having a fluorene skeleton.

In addition, as other radical polymerization initiators, there are given, for example: phosphine oxide-based compounds such as 2,4,6-trimethylbenzoyl diphenylphosphine oxide; and titanocene-based compounds such as bis(cyclopentadienyl)-bis[2,6-difluoro-3-(pyrrol-1-yl)]titanium.

As commercially available radical polymerization initiators, there are given, for example: ADEKA OPTOMER N-1414, N-1717, and N-1919, and ADEKA ARKLS NCI-831 and NCI-930 (all of which are manufactured by ADEKA Corporation); IRGACURE 184, IRGACURE 369, IRGACURE 651, IRGACURE 907, IRGACURE OXE 01, IRGACURE OXE 02, and IRGACURE 784 (all of which are manufactured by BASF); and TR-PBG-304, TR-PBG-305, TR-PBG-309, and TR-PBG-314 (all of which are manufactured by Tronly).

Any compound may be used as the cationic polymerization initiator as long as the compound can release a substance that initiates cationic polymerization through energy ray irradiation or heating, but is preferably a double salt, which is an onium salt that releases a Lewis acid through energy ray irradiation, or a derivative thereof. Examples thereof include: aryl diazonium salts, such as phenyldiazonium hexafluorophosphate, 4-methoxyphenyldiazonium hexafluoroantimonate, and 4-methylphenyldiazonium hexafluorophosphate; diaryl iodonium salts, such as diphenyliodonium hexafluoroantimonate, di(4-methylphenyl)iodonium hexafluorophosphate, di(4-tert-butylphenyl)iodonium hexafluorophosphate, and tolylcumyliodonium tetrakis(pentafluorophenyl)borate; and sulfonium salts of a sulfonium cation, and a hexafluoroantimony ion, a hexafluorophosphate ion, and a tetrakis(pentafluorophenyl)borate ion.

The blending amount of the polymerization initiator is preferably from 1 part by mass to 100 parts by mass, more preferably from 2 parts by mass to 50 parts by mass with respect to 100 parts by mass of the resin from the viewpoint of the adhesive strength of the adhesion layer before the electric pulse is applied.

An additive may be blended in the adhesive composition to be used in the present invention as required. For example, the following commonly used additives may each be incorporated as such additive: water adsorbents such as calcium oxide; non-reactive diluents (plasticizers), such as dioctyl phthalate, dibutyl phthalate, benzyl alcohol, and coal tar; fibrous fillers, such as a glass fiber, a pulp fiber, a synthetic fiber, and a ceramic fiber; reinforcing materials, such as a glass cloth, an aramid cloth, and a carbon fiber; pigments; silane coupling agents, such as γ-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, and γ-mercaptopropyltrimethoxysilane; lubricants, such as candelilla wax, carnauba wax, Japan wax, Chinese wax, bees wax, lanolin, spermaceti wax, montan wax, petroleum wax, aliphatic wax, an aliphatic ester, an aliphatic ether, an aromatic ester, and an aromatic ether; thickeners; thixotropic agents; antioxidants; light stabilizers; UV absorbers; flame retardants; defoaming agents; rust inhibitors; and colloidal silica and colloidal alumina. Further, tackifying resins, such as a xylene resin and a petroleum resin, may each be used in combination therewith.

When the additive is blended, the blending amount of the additive is 100 parts by mass or less, preferably 50 parts by mass or less with respect to 100 parts by mass of the resin from the viewpoint of the adhesive strength of the adhesion layer before the electric pulse is applied.

When the adhesive composition and the conductive filler are mixed, the adhesive composition containing the conductive filler to be used in the present invention is produced. A mixing method is not particularly limited, and a general method of mixing a filler into a resin composition such as a method using a roll-type kneader may be used.

The adhesive composition containing the conductive filler as described above is used when, for example, the two or more members for forming the article are bonded to each other. For example, an article in which the members bonded to each other via an adhesion layer containing the conductive filler may be obtained by applying the adhesive composition containing the conductive filler to at least one of the members, arranging the members so as to be superimposed on each other via the adhesive composition, and curing the composition. Herein, the thickness of the adhesion layer is not particularly limited, but falls within the range of from 1 um to 2 mm, and an application method therefor is also not particularly limited, and may be any general application method to be used for bonding members to each other.

The member may be a conductor or an insulator, or the member may be a combination of a conductor and an insulator. However, a case in which the member includes a conductor portion is preferred because, when the electric pulse is applied to dismantle the article as described later, the electric pulse can be more efficiently applied to the adhesion layer by bringing the electrode into abutment against the conductor portion.

Herein, examples of the conductor include: metal materials, such as copper, aluminum, and gold; and electric conductors, such as graphite and a conductive polymer, and examples of the insulator include non-electric conductors, such as glass, paper, and a plastic.

The environment under which the electric pulse is applied in this method may be any method in which a desired electric pulse can be applied to the article. Such environment may be in the atmosphere or in a liquid such as water. In addition, the method may be performed in a vacuum or a reduced-pressure environment. In this method, the environment is preferably in the atmosphere. This is because the application of the electric pulse is easy.

Next, a method of applying the electric pulse in the atmosphere in the present invention is described.

The atmosphere in this method only needs to be an environment in which the electric pulse can be applied, and may be, for example, an environment under atmospheric pressure.

The phrase "under atmospheric pressure" encompasses atmospheric pressure (1,013.25 hPa) and neighboring gas pressures, and also encompasses gas pressures within the range of normal changes of atmospheric pressure. The atmospheric pressure only needs to be a pressure in which the electric pulse can be applied, and may be set to fall within the range of, for example, from 700 hPa to 1,300 hPa.

The temperature in the atmosphere in which the electric pulse is applied only needs to fall within the temperature range in which a desired electric pulse can be applied to the article, and may be set to fall within the range of, for example, from - 40°C to 150°C. In particular, the temperature preferably falls within the range of from -20°C to 100°C, and may be particularly preferably set to fall within the range of from -10°C to 50°C. This is because the application of the electric pulse is easy. This is also because the suppression of, for example, deterioration of the article to which the electric pulse is applied is easy.

The humidity in the atmosphere in which the electric pulse is applied only needs to fall within the humidity range in which a desired electric pulse can be applied to the article, and may be set to, for example, under an environment of a relative humidity of from 1% to 99%.

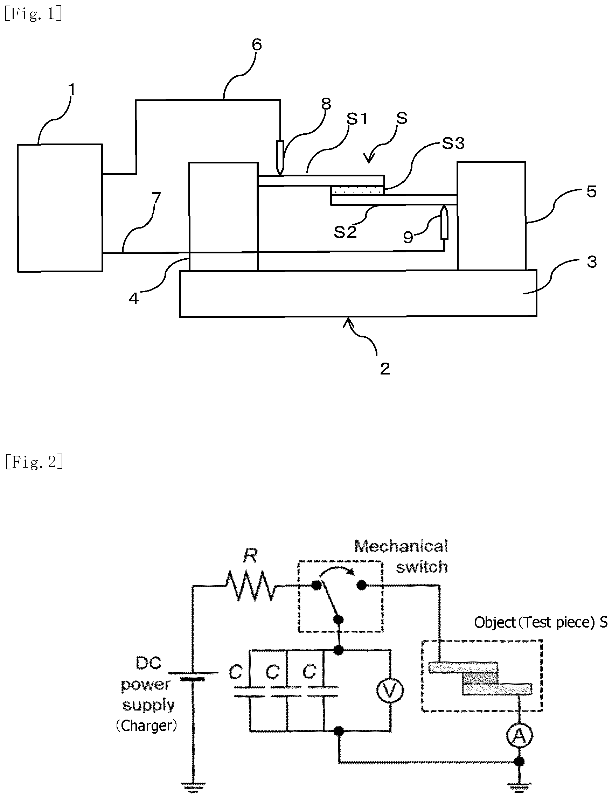

The application of the electric pulse is performed by using, for example, a high-voltage pulse generator 1 as illustrated in FIG. 1. The generator is not novel, and a known high-voltage pulse generator may be used. For example, a high-voltage pulse generator using a Marx booster circuit described in JP 56-139090 A may be used.

When a member of a comparably large home appliance product is dismantled, the dismantling may be performed under a state in which an object S is kept to be mounted on a floor or a work table 2. Meanwhile, when, for example, a mobile communication terminal is dismantled, but it is preferred that the object S be held on the work table 2 with a clamping tool or the like.

When the number of the objects S to be dismantled is small, the object S may be clamped with a vise. Meanwhile, when the number of the objects S to be dismantled is large, the dedicated work table 2 is suitably used. The work table 2 includes a base 3 and a pair of clamping tools 4 and 5 arranged on the base 3 as illustrated in FIG. 1. One of the pair of clamping tools 4 and 5 is fixed onto the base 3, and the other clamping tool 5 is configured in a slidable manner on the base 3.

In order to increase the operation efficiency of the dismantling, it is preferred that the clamping tool 5 be slid with a pneumatic device to clamp the object S. It is preferred that the periphery of the work table 2 be surrounded by a metal plate or a resin plate for securing safety.

A pair of electrodes (a positive electrode 8 and a negative electrode 9) is connected to the output terminals of the high-voltage pulse generator 1 through use of cables 6 and 7, and the electrodes are configured so that the electrodes can be brought into abutment against any position of a surface of the object S to be dismantled. Specifically, the positive electrode 8 and the negative electrode 9 are held by separate holders (not shown), and the holders are each fixed to the work table 2 with a magnet or the like. Accordingly, the respective electrodes can be simply brought into abutment against any position of the surface of the object S. That is, the electrodes are configured so that the positive electrode 8 and the negative electrode 9 can be separately brought into abutment against the front and back surfaces of the object S, or the positive electrode 8 and the negative electrode 9 can be easily brought into abutment against the same surface of the front or back surface of the object S.

In addition, in the method of the present invention, the operation is performed in the atmosphere, and hence a vessel for injecting a liquid medium is not required. Accordingly, the operation of bringing the positive electrode 8 and the negative electrode 9 into abutment against any position of the object S can be easily performed.

Herein, the description is made by taking a case in which the object S includes, for example, a steel plate S1 and a steel plate S2 bonded to each other via an adhesion layer S3 as an example. As in this case, when both of the members against which the electrodes are brought into abutment are conductors, even in the case where the electrodes are brought into abutment against positions apart from the formation region of the adhesion layer S3, the electric pulse can be applied without causing any problem when, for example, the distance is about 1 meter. However, when the formation region is too far from the abutting position of the electrode, discharge energy may be lost by the influence of the electric resistance and inductance of the steel plate.

In addition, when the member against which the electrode is brought into abutment includes the insulator, it is preferred that the electrode be brought into abutment against a closer position from the adhesion layer S3 so that the discharge energy may not be lost.

When the electric pulse is applied, internal discharge starting from the conductive filler occurs in the inner side of the adhesion layer S3, and the resin in the periphery of the conductive filler is gasified, and hence a void occurs in the adhesion layer S3. Accordingly, the adhesion layer S3 easily breaks.

Herein, a circuit diagram of the high-voltage pulse generator 1 is illustrated in FIG. 2. As illustrated in FIG. 2, the generator is configured so that the electric pulse is applied to the electrode that abuts on the object S by switching a mechanical switch to a discharge side (electrode side) after a capacitor C is charged from a DC power supply (charger). The application of the electric pulse can be performed a plurality of times by repeating the charge and the discharge by switching the mechanical switch between a charge side and the discharge side.

In this case, the charge voltage varies depending on the size of the region in which the adhesion layer is formed in the object and the thickness of the adhesion layer, but the charge is preferably performed within the range of from 0.1 kV to 100 kV. In addition, the capacity of the capacitor C is preferably from 0.1 µF to 10 µF.

The number of times of the application of the electric pulse varies depending on, for example, the size of the object S, but when the number of times is too large, the member for forming the object may be damaged, or the member or a functional part in the member may also be damaged. Accordingly, the application is preferably performed within the range of from 1 time to 20 times, and is more preferably performed within the range of from 1 times to 10 times.

With regard to the member after the electric pulse is applied, the member or the functional part in the member may be reused by removing the member and removing the remaining adhesion layer through washing or the like. As a method of removing the adhesion layer, there are given, for example, a method of manually removing the adhesion layer, a method of mechanically scraping off the adhesion layer, and a method of removing the adhesion layer by dissolving the layer with a solvent because the adhesive strength of the remaining adhesion layer is reduced. Examples of the functional part include home appliances, communication device terminals, toys, commodities, industrial devices, and automobile interior parts.

### Examples

The present invention is specifically described below by way of Examples.

### <Preparation of Adhesive Composition>

Respective components were loaded into a vessel in blending amounts shown in Table 1, and were stirred with a spatula at 25°C for 5 minutes. After that, the resultant was stirred with a planetary centrifugal mixer and was further stirred with a roll-type kneader. Thus, an adhesive composition was prepared.

**Table 1**

| Component | Blending amount (Part(s) by mass) |
|---|---|
| ADEKA RESIN EP-4300E*¹ (bisphenol A-type epoxy resin) | 60 |
| ADEKA RESIN EP-49-10P2*² (chelate-modified epoxy resin) | 10 |
| ADEKA RESIN EPR-1630*³ (rubber-modified epoxy resin) | 10 |
| ADEKA RESIN QR-9466¹⁴ (blocked urethane resin) | 20 |
| Dicyandiamide | 7 |
| Calcium oxide | 2 |
| 1,1-Dimethyl-3-phenylurea | 1 |

| | |
|---|---|
| *1 to 4: manufactured by ADEKA Corporation | |

Carbon black and copper each serving as a conductive filler were added in amounts shown in Table 2 in each of Examples 1 to 3 and in Example 4, respectively, to 100 parts by mass of the resultant adhesive composition, followed by mixing with a roll-type kneading machine, to prepare adhesive compositions containing carbon black and copper, respectively. In Comparative Example 1, the conductive filler was not added to the adhesive composition. The manufacturer name, product name, particle diameter, and density of the conductive filler used in Examples 1 to 4 are shown in Table 3.

**Table 2**

| (Unit: parts by mass) | | | | | |
|---|---|---|---|---|---|
| Sample | Example 1 | Example 2 | Example 3 | Example 4 | Comparative Example 1 |
| Adhesive Composition | 100 | 100 | 100 | 100 | 100 |
| Carbon black | 2.0 (1.3 vol%) | 5.3 (3.4 vol%) | 8.7 (5.5 vol%) | - | - |
| Copper | - | - | - | 26.3 (3.4 vol%) | - |

**Table 3**

| Conductive filler | Carbon black | Copper |
|---|---|---|
| Manufacturer name | Stem chemicals, Inc | Sigma-Aldrich |
| Product name | Acetylene Carbon Black | Copper nanopowder, 774111-5G |
| Particle diameter (nm) | 42 | 40-60 |
| Density (g/cm³) | 1.8 | 9 |

### [Tensile Shear Test Method]

### <Production of Test Piece>

A test piece to be used for a tensile shear test method was produced in accordance with JIS K 6850. Specifically, as illustrated in FIG. 1, two steel plates S1 and S2 (conductors) having the same shape (length: 10 cm, width: 2.5 cm, thickness: 1.6 cm) were prepared, and the adhesive compositions of Examples 1 to 4 and Comparative Example 1 were each applied to a predetermined region of one steel plate S1 with a spatula at a film thickness of about 0.2 mm. Next, the other steel plate S2 (conductor) was arranged on the steel plate S1 to which the adhesive composition was applied so that the two plates were stacked on each other only on the application region of the adhesive composition. After that, the steel plates S1 and S2 in the state of being superimposed on each other via the adhesive composition were loaded into a curing furnace, and the adhesive composition was cured under the conditions of 180°C and 30 minutes. Thus, a test piece including the two steel plates S1 and S2 were bonded to each other via an adhesion layer S3 was produced.

### <Application of Electric Pulse>

A pair of electrodes (the positive electrode 8 and the negative electrode 9) was arranged on each of the steel plate S1 and the steel plate S2 bonded to each other via the adhesion layer S3 in the laboratory atmosphere under an environment at room temperature by using the high-voltage pulse generator 1 illustrated in FIG. 1 and using the above-mentioned test piece as the object S. The respective electrodes were brought into abutment against the surfaces of the steel plates at positions about 5 cm apart from the formation region of the adhesion layer S3 on the opposite side to the formation region of the adhesion layer S3. Next, as illustrated in the circuit diagram of FIG. 2, the capacitor C was charged to 2.4 µF with a charger at a charge voltage of 10 kV, and an electric pulse was applied to the respective electrodes by switching the mechanical switch of a circuit to the electrode side (discharge side). The electric pulse was applied once or 10 times.

### <Measurement of Tensile Strength>

Each of the test pieces obtained by using the adhesive compositions of Examples 1 to 4 and Comparative Example 1 was subjected to the tensile shear test, and the tensile strength of the test piece after the application of the electric pulse and the tensile strength of the test piece to which no electric pulse was applied were each measured. Specifically, in each of the test pieces, one steel plate was pulled in a reverse direction to the other steel plate with a universal tester (manufactured by Shimadzu Corporation, AGIS-100kN) under the conditions of 25°C and 5 mm/min, and the tensile strength when the steel plate S1 and the steel plate S2 were peeled from each other, that is, when the adhesion layer S3 broke was measured as an adhesive strength.

As shown in Table 4, it was recognized that, while the adhesive strength of a test piece in which the steel plates were bonded to each other via an adhesion layer free of the conductive filler as in Comparative Example 1 remained unchanged at 33 MPa even when the electric pulse was applied 10 times, the adhesive strength of each of the test pieces of Examples 1 to 3 was changed as follows by applying the electric pulse 10 times: the adhesive strength was reduced from 34 MPa to 26 MPa (reduction by about 24%) in Example 1, was reduced from 33 MPa to 15 MPa (reduction by about 55%) in Example 2, and was reduced from 33 MPa to 11 MPa (reduction by about 67%) in Example 3. Also in Example 4, it was recognized that the adhesive strength was reduced from 23 MPa to 17 MPa (reduction by about 26%) by applying the electric pulse once.

**Table 4**

| Sample | Example 1 | Example 2 | Example 3 | Example 4 | Comparative Example 1 |
|---|---|---|---|---|---|
| Content of conductive filler | 1.3 vol% | 3.4 vol% | 5.5 vol% | 3.4 vol% | - |
| Number of times of application of electric pulse | 10 times | 10 times | 10 times | 1 time | 10 times |
| Adhesive strength when no electric pulse is applied (MPa) | 34 | 33 | 33 | 23 | 33 |
| Adhesive strength after application of electric pulse (MPa) | 26 | 15 | 11 | 17 | 33 |
| Presence or absence of internal discharge | Present | Present | Present | Present | Absent |

### <Observation of Surface of Adhesion layer after Breakage>

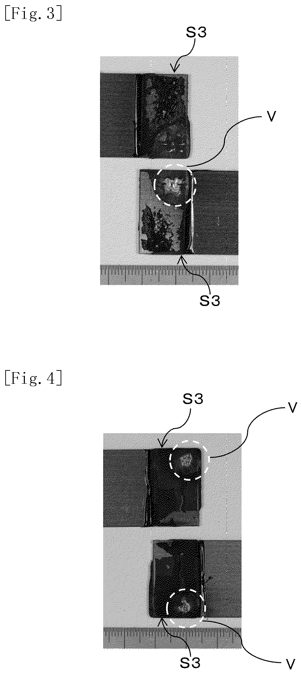

Enlarged photographs of the respective steel plates on the side on which the adhesion layer S3 was formed after each of the test pieces obtained by using the adhesive compositions of Examples 1 to 4 and Comparative Example 1 was subjected to the tensile shear test after the application of the electric pulse are shown in FIG. 3 to FIG. 7.

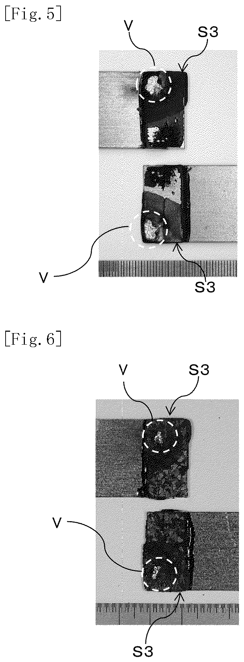

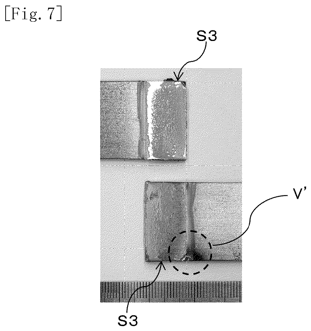

As shown in each of the photographs of FIG. 3 to FIG. 5, with regard to the adhesion layer S3 containing carbon black, a void (portion surrounded with a white dotted line in the photograph) recognized as a discharge mark V was observed in the inner portion of the adhesion layer S3. As shown in the photograph of FIG. 6, also in the adhesion layer S3 containing copper particles in Example 4, a void (portion surrounded with a white dotted line in the photograph) recognized as the discharge mark V was able to be observed in the inner portion of the adhesion layer S3, though the void was smaller than that of each of Examples 1 to 3. Meanwhile, as shown in the photograph of FIG. 7, in the adhesion layer S3 free of the conductive filler of Comparative Example 1, no discharge mark was able to be observed in the inner portion of the adhesion layer S3, and a discharge mark V' was observed (portion surrounded with a black dotted line in the photograph) at the end portion of the adhesion layer S3.

It is conceived that, when the electric pulse is applied to the test piece including the adhesion layer containing the conductive filler as in Examples 1 to 4, internal discharge starting from the conductive filler occurs in the adhesion layer, and hence the resin is decomposed to be gasified to generate the void.

### Industrial Applicability

The method of reducing an adhesive strength of an adhesion layer of the present invention can be utilized in dismantling of, for example, home appliances and mobile communication terminals that are not used any longer along with breakdown or a change in product life cycle.

### Reference Signs List

1 high-voltage pulse generator
2 work table
3 base
4, 5 clamping tool
6, 7 cable
8 positive electrode
9 negative electrode
S object
S1 steel plate
S2 steel plate
S3 adhesion layer
V, V' discharge mark

## Claims

1. A method of reducing an adhesive strength of an adhesion layer, the method comprising applying an electric pulse to an article including a portion in which two or more members are bonded to each other via an adhesion layer containing a conductive filler, to thereby reduce an adhesive strength of the adhesion layer.

2. The method according to claim 1, wherein the applying the electric pulse is performed in the atmosphere.

3. The method according to claim 1 or 2,
wherein the adhesion layer is formed of a cured product of an adhesive composition containing the conductive filler, and
wherein the adhesive composition contains at least one kind selected from the group consisting of: an epoxy-based resin; an acrylic resin; and a urethane-based resin.

4. The method according to any one of claims 1 to 3, wherein the conductive filler is at least one kind selected from the group consisting of: carbon black; graphene; a carbon nanotube (CNT); metal particles selected from copper, silver, gold, nickel, silver-coated copper, gold-coated copper, silver-coated nickel, and gold-coated nickel; and metal-coated resin particles selected from acrylic resin particles and urethane-based resin particles each coated with copper, silver, nickel, gold, or a mixture thereof.

5. The method according to any one of claims 1 to 4, wherein a content of the conductive filler in the adhesive composition is from 0.1 vol% to 40 vol% with respect to the adhesive composition containing the conductive filler.

6. The method according to any one of claims 1 to 5, wherein at least one of the two or more members includes a conductor portion.

7. A method of reusing a member or a functional part in the member, the method comprising:
performing the method of any one of claims 1 to 6; and
then removing the member from the article.
